# EUROPÄISCHE PATENTANMELDUNG

(11) **EP 1 400 976 A2**
(43) Veröffentlichungstag der Anmeldung: **24.03.2004**
(21) Anmeldenummer: 03011584.4
(22) Anmeldetag: 22.05.2003
(51) Int. Cl.: G11B 27/11, G11B 27/031, H04N 5/44, H04N 5/76

(54) **Verfahren und Vorrichtung zum Aufzeichnen und Wiedergabe von Inhalten**

(30) Priorität: 29.08.2002 DE 10239860
(71) Anmelder: Micronas GmbH, 79108 Freiburg (DE)
(72) Erfinder: Sieben, Ulrich, Dr., 79279 - Vörstetten (DE); Sinnhöfer, Werner, 79276 Reute (DE)
(74) Vertreter: Patentanwälte Westphal, Mussgnug & Partner

(57) **Zusammenfassung**

Es betrifft ein Verfahren zum Aufzeichnen und Wiedergeben von Inhalten, an dem wenigstens eine Aufnahme-/Speichereinheit und wenigstens eine Speicher-/Wiedergabeeinheit beteiligt sind, wobei die wenigstens eine Aufnahme-/Speichereinheit jeweils nach einem ihr zugeordneten ersten Regelsatz Inhalte aufzeichnet, zwischenspeichert, verwaltet und gegebenenfalls löscht, und wenigstens ein Teil der Inhalte jeweils nach einem zweiten Regelsatz in die wenigstens eine Speicher-/Wiedergabeeinheit überführt wird, und dort nach dem zugeordneten zweiten Regelsatz gespeichert, verwaltet und gegebenenfalls gelöscht wird. Basierend auf den ersten und zweiten Regelsätzen können große Mengen an Inhalten für einen Benutzer optimiert aufgezeichnet, gespeichert, verwaltet und gegebenenfalls wieder gelöscht werden.

## Beschreibung

Die Erfindung betrifft ein Verfahren zum Aufzeichnen und Wiedergeben von Inhalten und eine Vorrichtung zum Durchführen des genannten Verfahrens.

Bekannt sind Geräte zum Aufzeichnen von Sendungen aus Fernsehprogrammen nach einer durch den Benutzer vorgenommenen Vorauswahl, beispielsweise analoge und digitale Videorekorder. Die Auswahl der aufzuzeichnenden Sendungen wird dabei direkt aus einem Fernsehprogramm vorgenommen und manuell programmiert. Der Benutzer muss zur Aufzeichnung selbst nicht anwesend sein, muss jedoch rechtzeitig Videokassetten einlegen und manuell registrieren, auf welcher Videokassette welche Sendung aufgezeichnet wurde. Um Sendungen aus Radioprogrammen aufzunehmen, muss der Benutzer rechtzeitig zum Sendungsbeginn anwesend sein und die Aufzeichnung manuell starten und beenden.

Weiterhin bekannt ist es, Inhalte - vorwiegend Musiksendungen
- auf einem Computer zusammenzustellen und diese Inhalte automatisch auf ein tragbares Gerät, wie es beispielsweise von der Firma Apple Inc. unter der Bezeichnung I-Pod vertrieben wird, zu laden, sobald dieses an den Computer angeschlossen wird. Ein solches Gerät verfügt über eine genügend große Festplatte, um darauf große Mengen von Audio- und Videosendungen oder Textdateien speichern zu können, die der Benutzer mobil mit sich tragen kann. Beispielsweise lassen sich auf einer Festplatte mit einer Speicherkapazität von 5 GB etwa 1000 verschiedene Musikstücke speichern.

Es ist bereits möglich, Festplatten mit einer Kapazität von 100 GB herzustellen, wobei sich diese Kapazität in absehbarer Zeit um einige Größenordnungen steigern lassen kann. Der Umgang mit Speichermedien dieser Größenordnung ist sicherlich nicht mehr in der gewohnten Weise möglich. Beispielsweise können einige tausend oder zehntausend Musikstücke nicht manuell auf einen Datenträger aufgezeichnet und der Datenträger nicht nach einem bestimmten Musikstück durchsucht werden. Weiterhin stellt sich die Frage, wie vermieden werden kann, dass der Speicher mit unbrauchbarer oder unerwünschter Information gefüllt wird, oder wie Informationen, die nicht mehr benötigt werden und unnötig Speicherplatz belegen, wieder aus dem Speicher gelöscht werden können. Es ist beispielsweise unmöglich, mehrere tausend Musikstücke manuell dahingehend zu durchsuchen, ob sich vom Benutzer nicht mehr erwünschte Titel unter ihnen befinden.

Aufgabe der Erfindung ist es, die dargestellte Probleme beim Aufzeichnen und Wiedergeben von Inhalten auf einem sehr großen Speicher zu lösen.

Diese Aufgabe wird erfindungsgemäß gelöst durch ein Verfahren zum Aufzeichnen und Wiedergeben von Inhalten gemäß Patentanspruch 1 und durch eine Vorrichtung zum Aufzeichnen und Wiedergeben von Inhalten gemäß Patentanspruch 23.

Vorteilhafte Ausführungen und Weiterbildungen der Erfindung sind in den Unteransprüchen angegeben.

Soll ein sehr großer Speicher automatisch mit Inhalt gefüllt werden, so kann dies bei einem sehr großen Datenangebot nur regelbasiert erfolgen. Eine explizite manuelle Kennzeichnung von Programmen, die gespeichert werden sollen, durch den Benutzer reicht nicht mehr aus. Daher besteht das erfindungsgemäße Verfahren zum Aufzeichnen und Wiedergeben von Inhalten darin, wenigstens eine Aufnahme-/Speichereinheit und wenigstens eine Speicher-/Wiedergabeeinheit zu verwenden, wobei die wenigstens eine Aufnahme-/Speichereinheit nach einem ihr zugeordneten ersten Regelsatz Inhalte aufzeichnet, zwischenspeichert, verwaltet und gegebenenfalls löscht, und wenigstens ein Teil der Inhalte jeweils nach einem zweiten Regelsatz in die wenigstens eine Speicher-/Wiedergabeeinheit überführt wird, und dort nach dem zugeordneten zweiten Regelsatz gespeichert, verwaltet und gegebenenfalls gelöscht wird. Der Ort, an dem die beiden Regelsätze gespeichert sind, ist dabei von der Zuordnung der Regelsätze unabhängig, so dass beide Regelsätze auf der Aufnahme-/Speichereinheit oder der erste Regelsatz auf der Aufnahme-/Speichereinheit und der zweite Regelsatz auf der Speicher-/Wiedergabeeinheit gespeichert sein kann.

Die wenigstens eine Aufnahme-/Speichereinheit dient dazu, mittels des ersten Regelsatzes als Filter aus einem großen Angebot aufzeichnungswürdige Inhalte lokal zu speichern, während die Speicher-/Wiedergabeeinheit über den zweiten Regelsatz als weiteren Filter auf die vorselektierten Inhalte zugreifen kann. Dabei legen die Regeln fest, Inhalte welcher Art aufgezeichnet werden sollen, so dass eine manuelle Auswahl von Inhalten oder gar eine Anwesenheit des Benutzers rechtzeitig zur Aufzeichnung entfällt.

Vorzugsweise werden die Inhalte aus Rundfunkprogrammen, insbesondere aus allgemein zugänglichen Radio- und Fernsehprogrammen, aufgezeichnet. Die täglich ausgestrahlten Rundfunkprogramme wie Radio und Fernsehen bieten eine fast unerschöpfliche Menge an Inhalten, aus der nach dem ersten Regelsatz Inhalte ausgewählt und auf der Aufnahme-/Speichereinheit zwischengespeichert werden. Dabei kann die Aufnahme/Speichereinheit zu jedem Zeitpunkt auf alle Rundfunksendungen zugreifen. Der erste Regelsatz enthält die Information, welche Sendungen welches Senders zu welchem Zeitpunkt aufgezeichnet werden sollen. Um Überschneidungen zu vermeiden, wenn z. B. mehrere für den Benutzer interessante Sendungen gleichzeitig übertragen werden, ist es von Vorteil, mehrere Rundfunkempfänger parallel mit der Aufnahme-/Speichereinheit zu verbinden.

Bei einer vorteilhaften Ausführung der Erfindung kann die wenigstens eine Speicher-/Wiedergabeeinheit von der wenigstens einen Aufnahme-/Speichereinheit abgetrennt werden, wobei diese Einheit bezüglich ihrer Abmessungen vorzugsweise so gestaltet ist, dass sie ohne Aufwand vom Benutzer getragen werden kann. Der Benutzer kann somit eine selektierte Menge an Inhalten mobil mit sich tragen, während die Aufnahme-/Speichereinheit weiterhin lokal Inhalte aufzeichnet.

Bei einer besonders vorteilhaften Ausführung der Erfindung enthalten die ersten Regelsätze vom Benutzer definierte Präferenzen bezüglich gewünschter aus dem Rundfunkprogramm aufzuzeichnender Inhalte. Der erste Regelsatz ist somit ein vom Benutzer individuell definierter Filter, mit dem aus dem Rundfunkprogramm nur solche Inhalte aufgezeichnet werden, die die Benutzer interessieren. Vorzugsweise sind die Präferenzen nur auf der zugehörigen Aufnahme-/Speichereinheit und der zugehörigen Speicher-/Wiedergabeeinheit zugänglich, so dass die Privatsphäre des Benutzers gewahrt ist. Die Information über die Präferenzen des Benutzers sollte auch deswegen nicht nach außen abgegeben werden, damit der Benutzer keine unerwünschte Werbung, die direkt auf ihn zugeschnitten sein könnte, erhält.

Vorzugsweise werden die Inhalte von der wenigstens einen Aufnahme-/Speichereinheit auf die wenigstens eine Speicher/Wiedergabeeinheit überführt, sobald die wenigstens eine Aufnahme-/Speichereinheit und die wenigstens eine Speicher/Wiedergabeeinheit miteinander in Kontakt treten. Selbstverständlich können mehrere Aufnahme-/Speichereinheiten und mehrere Speicher-/Wiedergabeeinheiten an dem Verfahren zum Aufzeichnen und Wiedergeben von Inhalten beteiligt sein. Die Inhalte werden jeweils bei Kontakt von beliebigen Paaren aus je einer Aufnahme-/Speichereinheit und je einer Speicher/Wiedergabeeinheit wie beschrieben überführt. Dadurch ist gewährleistet, dass die neu von der Aufnahme-/Speichereinheit aufgezeichneten Inhalte auf der Speicher-/Wiedergabeeinheit schnellstmöglich verfügbar sind. Vorteilhafterweise wird der Kontakt zwischen der wenigstens einen Aufnahme/Speichereinheit und der wenigstens einen Speicher/Wiedergabeeinheit über eine Kabelverbindung, eine Funk- oder eine Datennetzverbindung hergestellt.

Bei einer weiteren vorteilhaften Weiterbildung der Erfindung ist in der wenigstens einen Aufnahme-/Speichereinheit jeweils ein erster Regelsatz und in der wenigstens einen Speicher/Wiedergabeeinheit jeweils ein zweiter Regelsatz gespeichert. Dies ist von Vorteil, da der erste Regelsatz den Kontakt zwischen Rundfunk und Aufnahme-/Speichereinheit kontrolliert, der zweite Regelsatz hingegen für den Austausch zwischen Aufnahme/Speichereinheit und Speicher-/Wiedergabeeinheit zuständig ist. Da mehrere Speicher-/Wiedergabeeinheiten an einer Aufnahme-/Speichereinheit angeschlossen sein können, wobei die verschiedenen Speicher-/Wiedergabeeinheiten von unterschiedlichen Benutzern mit verschiedenen Präferenzen benutzt werden können, können die zweiten Regelsätze unterschiedlich ausfallen. Insbesondere werden sie spezieller ausfallen als der der Aufnahme-/Speichereinheit zugeordnete erste Regelsatz, so dass es von Vorteil ist, je einen zweiter Regelsatz über die jeweilige Speicher-/Wiedergabeeinheit einem bestimmten Benutzer zuzuordnen. Auch aus Speicherkapazitätsgründen kann es erforderlich sein, dass der zweite Regelsatz, der die Auswahl der in der Speicher-/Wiedergabeeinheit gespeicherten Daten bestimmt, spezieller ist als der erste Regelsatz. So kann die Aufnahme/Speichereinheit über einen größeren Speicher - und gegebenenfalls weitere Resourcen - als die Speicher-/Wiedergabeeinbeit verfügen, was dort die Speicherung größerer Datenmengen nach einem allgemeineren ersten Regelsatz erlaubt. Insbesondere für eine lokale Bearbeitung des zweiten Regelsatzes auf der Speicher-/Wiedergabeeinheit ist eine Speicherung des zweiten Regelsatzes direkt auf der zugehörigen Speicher/Wiedergabeeinheit von Vorteil. Der zweite Regelsatz kann hierdurch auch dann bearbeitet werden, wenn der Portable nicht mit dem Intermediate verbunden ist.

Vorzugsweise werden die aus dem Rundfunkprogramm aufgezeichneten Inhalte von der wenigstens einen Aufnahme-/Speichereinheit basierend auf dem zugehörigen ersten Regelsatz mit bestimmten Zusatzinformationen versehen. Die Zusatzinformation ermöglicht einerseits ein einfacheres Wiederauffinden der aufgezeichneten Inhalte auf dem Speicher. Andererseits kann sie auch dem Benutzer angezeigt werden, um ihn kurz über die Inhalte zu informieren. Bei der Zusatzinformation kann es sich um sendungsbezogene Daten handeln, wie z. B. Datum, Zeit und Dauer der Aufzeichnung, Name des Senders und der Sendung.

Besonders geeignet als Zusatzinformation sowohl für den Benutzer zur Information über die Inhalte als auch zum organisierten Ablegen und Wiederfinden der Inhalte auf dem Speicher sind bestimmte Schlagwörter, die den Inhalt der Aufzeichnung kennzeichnen. Besonders von Vorteil als Zusatzinformation sind Schlagwörter, die im Zusammenhang mit den Präferenzen des Benutzers stehen, die zur Aufzeichnung der Inhalte geführt haben. Die Zusatzinformation und/oder die Schlagwörter können auch einer anderen Quelle als der Rundfunksendung, beispielsweise einer über ein Datennetz erhältlichen Beschreibung der Rundfunkinhalte, entnommen werden. Selbstverständlich kann dabei auch der gesamte Text dieser Beschreibung der Rundfunkinhalte als Zusatzinformation mit den aufgezeichneten Inhalten verknüpft werden.

Liegt keinerlei Zusatzinformation vor, besteht die Möglichkeit, den Rundfunkinhalt mit einem Spracherkennungsprogramm zu überprüfen und aus dem gewonnenen Text Schlagwörter als Zusatzinformation zu entnehmen. Vorteilhafterweise wird der Rundfunkinhalt von einem Spracherkennungsprogramm auf vorgegebene Schlagwörter aus einem Wörterbuch überprüft, in dem die vom Benutzer häufig verwendeten Schlagwörter zusammengestellt sind. Dieses Verfahren ist einerseits weniger aufwändig als den gesamten Rundfunkinhalt von einem Spracherkennungsprogramm in einen Text zu überführen und liefert ebenfalls aussagekräftige Zusatzinformationen. Andererseits lässt sich dadurch, dass der Rundfunkinhalt auf Schlagworte überprüft wird, die vom Benutzer selbst oft verwendet werden, der Inhalt leichter von der Aufnahme-/Speichereinheit einordnen und der Benutzer kann schneller erkennen, ob der Inhalt für ihn interessant ist.

Vorzugsweise kann der zweite Regelsatz der zugehörigen Speicher-/Wiedergebeeinheit vom Benutzer verändert werden. Dadurch kann der Benutzer der Speicher-/Wiedergabeeinheit die Inhalte, die von einer Aufnahme-/Speichereinheit auf seine Speicher/Wiedergabeeinheit überführt werden, nach seinen Präferenzen gestalten. Z. B. kann er bei einem Treffen mit anderen Benutzern erhaltene Informationen über interessante Inhalte sofort in seinem zweiten Regelsatz vermerken.

Bei einer vorteilhaften Ausführung der Erfindung fordert die wenigstens eine Speicher-/Wiedergabeeinheit mittels des zugehörigen zweiten Regelsatzes Inhalte von der wenigstens einen Aufnahme-/Speichereinheit an. Somit kann vom Benutzer einer Speicher-/Wiedergabeeinheit aktiv über den zweiten Regelsatz entschieden werden, welche Inhalte auf seine Speicher/Wiedergabeeinheit geladen werden sollen. Vorzugsweise werden bei Kontakt der wenigstens einen Aufnahme-/Speichereinheit und der wenigstens einen Speicher-/Wiedergabeeinheit basierend auf dem zweiten Regelsatz der Speicher-/Wiedergabeeinheit die Zusatzinformationen der in der Aufnahme-/Speichereinheit aufgezeichneten Inhalte nach Inhalten, die auf die Speicher/Wiedergabeeinheit überführt werden sollen, durchsucht. Der Suchvorgang erfolgt beispielsweise unter Verwendung eines Index der Inhalte und ihrer Zusatzinformationen. So wird gewährleistet, dass der Benutzer der Speicher-/Wiedergabeeinheit die Inhalte erhält, die seinen Präferenzen entsprechen.

Bei einer weiteren vorteilhaften Ausführung der Erfindung wirkt bei Kontakt der wenigstens einen Aufnahme/Speichereinheit und der wenigstens einen Speicher/Wiedergabeeinheit der zweite Regelsatz auf den ersten Regelsatz zurück. Alle Änderungen des zweiten Regelsatzes werden somit automatisch vom ersten Regelsatz aufgenommen, so dass das Aufzeichnungsverhalten der Aufnahme-/Speichereinheit entsprechend den veränderten Präferenzen des Benutzers der Speicher-/Wiedergabeeinheit angepasst wird.

Vorzugsweise kann der zweite Regelsatz durch Beobachtung des Benutzerverhaltens automatisch dem Benutzer angepasst werden. Damit ergibt sich eine Alternative zur manuellen Änderung des zweiten Regelsatzes durch den Benutzer. Indem der Benutzer Inhalte, die einer bestimmten Präferenz entsprechen, besonders häufig abruft, erhält diese Präferenz eine größere Priorität. Andererseits erhalten Präferenzen von Inhalten, die über lange Zeit nicht abgerufen oder sofort vom Benutzer gelöscht wurden, eine geringere Priorität. Wirkt der zweite Regelsatz einer Speicher-/Wiedergabeeinheit bei Kontakt der Speicher/Wiedergabeeinheit mit der Aufnahme-/Speichereinheit auf den ersten Regelsatz zurück, so kann der Aufnahme-/Speichereinheit mitgeteilt werden, die Inhalte, die einer Präferenz mit jetzt höherer Priorität entsprechen, bevorzugt aufzuzeichnen und entsprechend die Inhalte, die einer Präferenz mit jetzt geringerer Priorität entsprechend, in geringerem Maße aus den Rundfunkprogrammen auszuwählen. Somit ist bereits allein dadurch, dass der Benutzer die Sendungen, die seinen Interessen entsprechen, bevorzugt hört, gewährleistet, dass ihm auch weiterhin solche Sendungen von der Aufnahme-/Speichereinheit zur Verfügung gestellt werden.

Bei einer weiteren vorteilhaften Ausbildung der Erfindung können bei Kontakt von zwei Speicher-/Wiedergabeeinheiten Inhalte untereinander ausgetauscht werden. Damit sind dem Benutzer einer Speicher-/Wiedergabeeinheit nicht nur die Inhalte eigener Aufnahme-/Speichereinheiten zugänglich. Vielmehr können von Benutzern mit ähnlichen Präferenzen Inhalte von deren Speicher-/Wiedergabeeinheit auf die eigene Speicher/Wiedergabeeinheit überspielt werden, die sich möglicherweise trotz ähnlicher Präferenzen unterscheiden. Vorteilhafterweise können bei Kontakt von zwei Speicher-/Wiedergabeeinheiten auch wenigstens Teile deren zugehöriger zweiter Regelsätze untereinander ausgetauscht werden. Damit ergibt sich die Möglichkeit, bei Interesse an Inhalten einer Speicher/Wiedergabeeinheit eines anderen Benutzers in Zukunft ähnliche Inhalte mit der eigenen Aufnahme-/Speichereinheit aufzufinden, nachdem der geänderte eigene zweite Regelsatz an die Aufnahme/Speichereinheit und den zugehörigen ersten Regelsatz zurückgegeben wurde.

Vorzugsweise konvertiert die wenigstens eine Aufnahme/Speichereinheit die aufgezeichneten Inhalte automatisch in ein mit der wenigstens einen Speicher-/Wiedergabeeinheit kompatibles Format. Somit muss ein Konvertierungsprogramm nur auf der Aufnahme-/Speichereinheit und nicht auf möglicherweise zahlreichen Speicher-/Wiedergabeeinheiten installiert werden. Dies verringert Kosten und ermöglicht eine schnelle Umstellung, falls sich das von Speicher-/Wiedergabeeinheiten benötigte Format verändert.

Bei einer weiteren Ausführung der Erfindung greift die wenigstens eine Aufnahme-/Speichereinheit über eine digitale oder analoge drahtgebundene oder drahtlose Schnittstelle auf eine Vorrichtung zu, die ihrerseits auf die Rundfunkprogramme zugreift. Damit wird z. B. ermöglicht, dass auch aus Lautsprecher ertönende Musikstücke oder Vorträge auf einer Aufnahme/Speichereinheit aufgezeichnet werden können.

Im Folgenden wird ein Ausführungsbeispiel ausführlich beschrieben, wobei die beigefügten Zeichnungen die Zusammenhänge grafisch darstellen. Es zeigen:

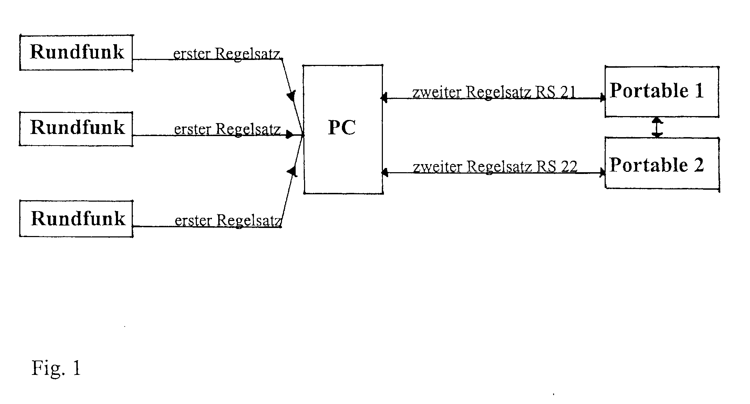

- Figur 1: Zugriffsmöglichkeiten zwischen Rundfunkquellen, einer Aufnahme-/Speichereinheit und zwei Speicher/Wiedergabeeinheiten,

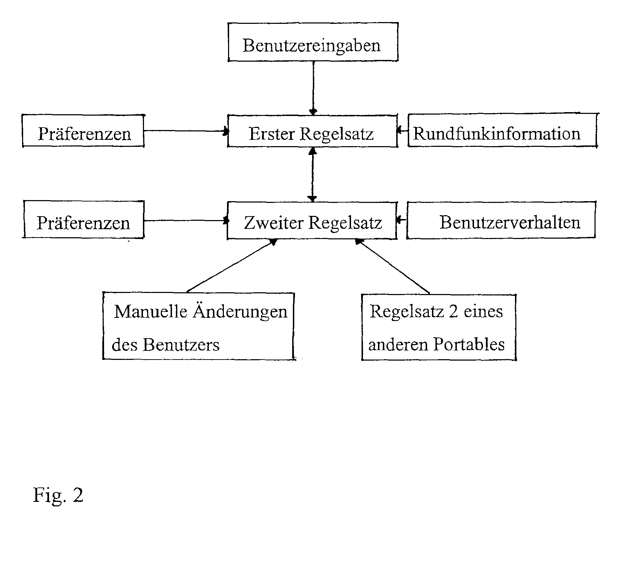

- Figur 2: die unterschiedlichen Informationen, die in einem ersten und zweiten Regelsatz berücksichtigt werden und
- Figur 3: ein Beispiel für ein Baumdiagramm von Präferenzen eines Benutzers.

An dem dargestellten beispielhaften Verfahren zum Aufzeichnen und Wiedergeben von Inhalten ist eine Aufnahme/Speichereinheit beteiligt, die beispielsweise als Computer ausgebildet ist. Der Computer ist über einen USB-Bus mit drei Rundfunkempfängern verbunden. Der Computer zeichnet gemäß einem ersten Regelsatz Sendungen aus dem Rundfunkprogramm über die drei Rundfunkempfänger auf. An den Computer können zwei tragbare Speicher-/Wiedergabeeinheiten, z. B. MP3-Abspielgeräte, im Folgenden jedoch allgemeiner Portable genannt, angeschlossen werden, die jeweils über einen zweiten Regelsatz mit dem Computer kommunizieren.

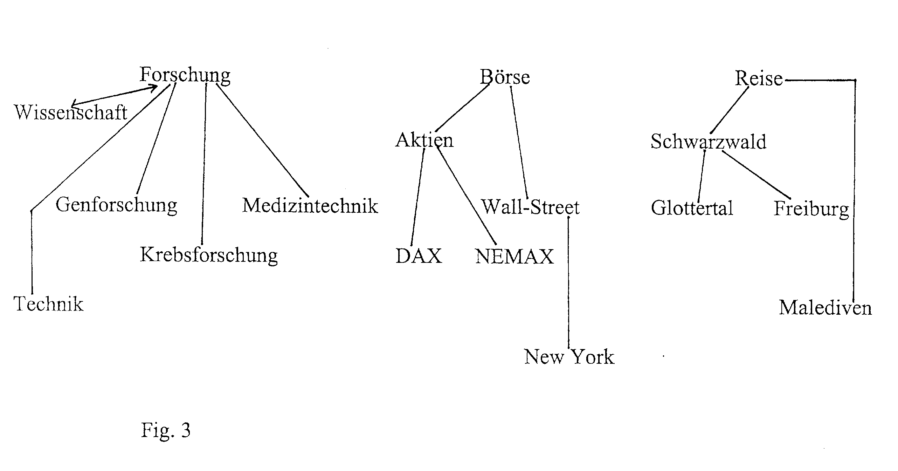

Die Aufzeichnung von Sendungen des Radioprogramms erfolgt folgendermaßen. Zunächst werden die Präferenzen eines Benutzers ermittelt. Die Präferenzen des Benutzers liegen im vorliegenden Beispiel im Bereich "Forschung", "Börse" und "Reise", insbesondere "Schwarzwald" (vgl. Fig. 3). Auf Basis dieser Präferenzen und gegebenenfalls geeigneter Synonyme wird ein Baumdiagramm der Präferenzen erstellt, in dem die Präferenzbegriffe nach ihrer Priorität angeordnet werden. Dabei haben die angegebenen Präferenzen "Forschung", "Börse" und "Schwarzwald" sehr hohe Priorität. Synonyme wie "Wissenschaft" werden ebenfalls mit hoher Priorität belegt. Begriffe, die den einzelnen Bereichen nur entfernt zugeordnet werden können, wie z. B. der alleinstehende Begriff "New York" im Bereich "Börse", werden mit geringerer Priorität belegt.

Der Computer hat Zugriff auf ein vollständiges Rundfunkprogramm und eine Liste von Rundfunksendern mit zugehörigen Frequenzen. Anhand der Präferenzinformationen werden die Rundfunkinformationen, d. h. das Radioprogramm und möglicherweise auch in einem Datennetz vorhandene Beschreibungen der einzelnen Sendungen, daraufhin überprüft, welche der Sendungen unter die Präferenzen des Benutzers fallen. Es wird eine Liste erstellt, welche Sendungen zu welchem Zeitpunkt bei welchem Sender aufgezeichnet werden sollen. Sollten sich mehrere Sendungen überschneiden, können mehrere Rundfunkempfänger zur Aufzeichnung verwendet werden. Überschneiden sich mehr Sendungen als Rundfunkempfänger an den Computer angeschlossen sind, kann entweder der Benutzer den Konflikt manuell lösen, falls er vom System darauf aufmerksam gemacht wurde, oder der Computer greift auf die Präferenzinformation zurück und zeichnet die Sendungen mit höherer Priorität auf.

Ein Timer kontrolliert, wann eine Sendung zur Aufzeichnung ansteht. Der Computer wählt rechtzeitig einen der Rundfunkempfänger aus, stellt die richtige Frequenz ein und startet die Aufzeichnung. Gegebenfalls wird das Rundfunksignal digitalisiert und komprimiert, und anschließend werden die Daten auf dem Speicher des Computers gespeichert. Dabei wird gleichzeitig ein Eintrag in einer Liste von aufgezeichneten Sendungen erzeugt, auf die der Benutzer zugreifen kann.

Die aufgezeichneten Rundfunksendungen werden vom Computer mit Zusatzinformation versehen. Die Zusatzinformation kann zunächst aus sendungsbezogenen Daten bestehen, z. B. Datum, Zeit und Dauer der Sendung, Name des Senders und der Sendung. Weiterhin können die Begriffe der Präferenzinformation, die zur Aufzeichnung geführt haben, angefügt werden. Zum Beispiel kann eine Sendung aufgrund des Begriffs "Freiburg" ausgewählt worden sein, so dass dieser Begriff in der Zusatzinformation aufgeführt werden sollte, um diese Sendung von Sendungen mit der Zusatzinformation "Glottertal" zu unterscheiden. Weiterhin kann als Zusatzinformation auch die Datennetzbeschreibung der Rundfunkinhalte ganz oder teilweise übernommen werden. Die Zusatzinformation kann auch einem Rundfunkdatendienst, wie beispielsweise RDS, entnommen werden.

Sollte aus unbestimmten Gründen keine derartige Zusatzinformation vorhanden sein, besteht die Möglichkeit, die aufgezeichnete Sendung mit einem Spracherkennungsprogramm zu erfassen.

Es können dann in dem so erhaltenen Text besonders häufig vorkommende Begriffe als Zusatzinformation gewählt werden. Da eine vollständige Erfassung des Textes mittels eines Spracherkennungsprogramms sehr aufwändig und oft ungenau ist (kann der Rundfunkinhalt auch nur auf bestimmte Begriffe mittels des Spracherkennungsprogramms überprüft werden. Diese Begriffe können z. B. die vom Benutzer häufig verwendeten Schlagwörter oder Präferenzen sein, die in einem Wörterbuch zusammengestellt sind. Auf dem Computer steht nun eine große Menge an aufgezeichneten Sendungen mit angefügter Zusatzinformation zur Verfügung.

Sofern bekannt ist, dass beispielsweise Sendungen zu einer bestimmten Tageszeit entsprechend der Präferenzliste interessant sein könnten, besteht die Möglichkeit, gerade solche Radiooder Fernsehsendungen auf die Häufigkeit des Vorkommens von Schlagworten aus der Präferenzliste zu untersuchen und gegebenenfalls noch nachträglich abzuspeichern.

Der Benutzer kann jetzt seinen Portable an den Computer anschließen. Auf dem Portable ist ein zweiter Regelsatz gespeichert, der u. a. die Präferenzinformation "Forschung" enthält. Somit wird beim Anschließen des Portables automatisch die Zusatzinformation der auf dem Computer gespeicherten Sendungen nach dem Begriff "Forschung" und mit diesem Begriff verknüpften Begriffen durchsucht. Diese Sendungen werden automatisch auf den Portable überführt. In dem ersten Regelsatz könnte nun zusätzlich der Befehl gespeichert sein, diese abgerufenen Sendungen auf dem Computer zu löschen, sofern kein weiterer Benutzer als Interessent für diese Sendung in Frage kommt. So wird sichergestellt, dass nur aktuelle Sendungen auf dem Speicher des Computers vorhanden sind und der Speicher nicht mit überflüssigen Sendungen belastet wird. Der Benutzer kann nun seinen Portable abkoppeln und mobil benutzen.

Sendungen, die der Benutzer des Portables bereits gehört hat, kann der Benutzer sofort löschen. Sendungen, die dem Benutzer nicht zugesagt haben, können von ihm im zweiten Regelsatz vermerkt werden. Wenn dem Benutzer eine Sendung besonders gut gefallen hat, kann er im zweiten Regelsatz vermerken, dass diese Sendung in Zukunft mit hoher Priorität aufgezeichnet und ähnliche Sendungen aus dem Rundfunkprogramm ausgewählt werden sollen. Zusätzlich zu den manuellen Veränderungen des zweiten Regelsatzes durch den Benutzer wird der Benutzer vom zweiten Regelsatz "beobachtet". Wird eine bestimmte Sendung vom Benutzer nicht sofort oder in einem bestimmten Zeitraum überhaupt nicht gehört, wird vom zweiten Regelsatz die zugehörige Präferenzinformation mit einer geringeren Priorität versehen. Wird hingegen eine bestimmte Sendung mehrmals gehört, steigt die Priorität der entsprechenden Präferenzinformation. Auch die Sendungen, die vom Benutzer ohne zu hören sofort gelöscht werden, werden registriert. Weiterhin kann der zweite Regelsatz Sendungen, die vom Benutzer auch nach längerer Zeit nicht abgerufen wurden, automatisch löschen, um den Speicherplatz für interessantere Sendungen freizugeben.

Trifft der Benutzer eines Portables einen zweiten Benutzer, können die beiden Portablen miteinander in Kontakt treten. Mittels des zweiten Regelsatzes können auch von dem zweiten Portable für den Benutzer des ersten Portable interessante Inhalte auf den Portable überspielt werden. Anstelle von konkreten Sendungen können auch Teile von Präferenzlisten oder zweiten Regelsätzen zwischen den Portablen ausgetauscht werden. So wird es dem Benutzer des ersten Portables ermöglicht, in Zukunft - nach dem nächsten Kontakt seines Portables mit seinem Computer - für ihn interessante Sendungen aufzeichnen zu lassen, die er mit dem eigenen zweiten Regelsatz nicht erhalten hätte. Des weiteren ist es möglich, die Inhalte, die in einen Portablen von einem anderen Portablen übernommen wurden, auf den Intermediate zu überspielen, um die Inhalte dadurch den anderen Benutzern des Intermediate zur Verfügung zu stellen. Diese Überspielung von Daten von dem Portable auf den Intermediate erfolgt vorzugsweise regelbasiert. So können dem Portable beispielsweise Präferenzen andere Nutzer, die auf diesen Intermediate zugreifen, bekannt sein, so dass nur solche für die anderen Benutzer interessanten Informationen übertragen werden, die von diesen anderen Benutzern später abgerufen werden können.

Die von dem Portable an den Intermediate zurückgelieferten Daten können in dem Intermediate dazu verwendet werden, den ersten Regelsatz zu ändern, so dass zukünftig Inhalte nach geänderten Präferenzen empfangen und gespeichert werden.

Zur Kommunikation zweier Portabler untereinander können in jedem der Portablen jeweils auch ein dritter Regelsatz implementiert sein, der vorgibt, welche Daten mit dem Portablen eines anderen Benutzers ausgetauscht werden sollen.

Der zweite Regelsatz ermöglicht es weiterhin, den Portable auch an einen unbekannten Computer anzuschließen und diesen nach für den Benutzer interessanten Inhalten und Sendungen zu durchsuchen. Dabei lassen sich möglicherweise weitere interessante Sendungen finden, die mit dem eigenen ersten Regelsatz nicht aufgefunden wurden. Es besteht die Möglichkeit, Teile dieses ersten Regelsatzes auf den eigenen Portable zu überführen, damit den eigenen zweiten Regelsatz zu verändern und dies auf den eigenen ersten Regelsatz rückwirken zu lassen.

Schließt der Benutzer seinen Portable nun wieder an seinen Computer an, erhält er zunächst die neu gespeicherten Sendungen aus den Rundfunkprogrammen. Weiterhin gibt der zweite Regelsatz seine Änderungen an den ersten Regelsatz ab. Die geänderten Prioritäten von Präferenzinformationen oder neue Präferenzbegriffe führen dazu, dass demnächst andere Sendungen aus dem Rundfunkprogramm aufgezeichnet werden. Zusätzlich kann der erste Regelsatz auch direkt vom Benutzer am Computer geändert werden. Es ist weiterhin möglich, auch den zweiten Regelsatz am Computer zu ändern, da dies mit der vorhandenen Computertastatur einfacher möglich ist als am Portable selbst. Die Kommunikation der beiden Regelsätze, das manuelle Ändern der Regelsätze durch den Benutzer und das "Beobachten des Benutzerverhaltens" ermöglichen eine optimierte Aufzeichnung von für den Benutzer interessanten Sendungen aus dem Rundfunkprogramm.

Falls mehrere Portablen auf einen Computer zugreifen, muss der Computer alle Informationen der unterschiedlichen zweiten Regelsätze in dem ersten Regelsatz berücksichtigen, damit für jeden Benutzer die ihn interessierenden Sendungen aufgezeichnet werden. Weiterhin muss in dem ersten Regelsatz die Information darüber enthalten sein, welcher Portable eine Sendung bereits abgerufen hat und für welchen weiteren Portable diese Sendung noch von Interesse ist. Es darf keine Sendung gelöscht werden, für die noch von einem einzigen Portable eine Nachfrage besteht, auch wenn diese Sendung für andere Portable nicht mehr von Interesse ist. Sollten für die Aufzeichnung mehrerer Sendungen gleichzeitig nicht genügend Ressourcen vorhanden sein, muss in dem ersten Regelsatz weiterhin eine Priorisierung der unterschiedlichen Portablen und deren Benutzer vorhanden sein. In dieser Priorisierung kann auch wiederum eine Gewichtung von unterschiedlichen Präferenzinformationen vorgenommen werden. Wird weiterhin ein "fremder Portable" an den Computer angeschlossen, muss dies ebenfalls erkannt werden, damit dessen zweiter Regelsatz nicht den ersten Regelsatz des Computers verändert, was dazu führen könnte, dass die für die eigentlichen Benutzer interessanten Sendungen nicht mehr aufgezeichnet werden. Durch eine Vielzahl von Einflüssen auf den ersten und zweiten Regelsatz und die Wechselwirkung der ersten und zweiten Regelsätze wird somit eine Optimierung in Bezug auf die aufgezeichneten Sendungen erzielt.

## Patentansprüche

1. Verfahren zum Aufzeichnen und Wiedergeben von Inhalten, an dem wenigstens eine Aufnahme-/Speichereinheit und wenigstens eine Speicher-/Wiedergabeeinheit beteiligt sind, wobei die wenigstens eine Aufnahme-/Speichereinheit nach einem ihr zugeordneten ersten Regelsatz Inhalte aufzeichnet, zwischenspeichert, verwaltet und gegebenenfalls löscht, und wenigstens ein Teil der Inhalte jeweils nach einem zweiten Regelsatz in die wenigstens eine Speicher/Wiedergabeeinheit überführt wird, und dort nach dem zugeordneten zweiten Regelsatz gespeichert, verwaltet und gegebenenfalls gelöscht wird.

2. Verfahren nach Anspruch 1,
**dadurch gekennzeichnet, dass** die Inhalte aus Rundfunkprogrammen, insbesondere aus allgemein zugänglichen Radio- und Fernsehprogrammen, aufgezeichnet werden.

3. Verfahren nach einem der vorhergehenden Ansprüche,
**dadurch gekennzeichnet, dass** die wenigstens eine Speicher-/Wiedergabeeinheit von der wenigstens einen Aufnahme-/Speichereinheit abkoppelbar ist.

4. Verfahren nach einem der vorhergehenden Ansprüche,
**dadurch gekennzeichnet, dass** die ersten Regelsätze von einem Benutzer definierte Präferenzen bezüglich gewünschter aus dem Rundfunkprogramm aufzuzeichnender Inhalte enthalten.

5. Verfahren nach Anspruch 4,
**dadurch gekennzeichnet, dass** die Präferenzen nur auf der zugehörigen Aufnahme-/Speichereinheit und der zugehörigen Speicher-/Wiedergabeeinheit zugänglich sind.

6. Verfahren nach einem der Ansprüche 1,2 und 3,
**dadurch gekennzeichnet, dass** die neu aufgezeichneten Inhalte von der wenigstens einen Aufnahme/Speichereinheit auf die wenigstens eine Speicher/Wiedergabeeinheit überführt werden, sobald die wenigstens eine Aufnahme-/Speichereinheit und die wenigstens eine Speicher-/Wiedergabeeinheit miteinander in Kontakt treten.

7. Verfahren nach Anspruch 6,
**dadurch gekennzeichnet, dass** der Kontakt zwischen der wenigstens einen Aufnahme/Speichereinheit und der wenigstens einen Speicher/Wiedergabeeinheit über eine Kabelverbindung oder über eine Funkverbindung, insbesondere über eine Telefonnetzverbindung oder eine Datennetzverbindung, hergestellt wird.

8. Verfahren nach einem der Ansprüche 1, 2, 3 6 und 7,
**dadurch gekennzeichnet, dass** in der wenigstens einen Aufnahme-/Speichereinheit jeweils ein erster Regelsatz und in der wenigstens einen Speicher/Wiedergabeeinheit jeweils ein zweiter Regelsatz gespeichert ist.

9. Verfahren nach einem der Ansprüche 1, 2, 3, 6, 7 und 8,
**dadurch gekennzeichnet, dass** die aus dem Rundfunkprogramm aufzuzeichnenden Inhalte von der wenigstens einen Aufnahme-/Speichereinheit basierend auf dem zugehörigen ersten Regelsatz mit bestimmten Zusatzinformationen versehen werden.

10. Verfahren nach Anspruch 9,
**dadurch gekennzeichnet, dass** in der Zusatzinformation bestimmte Schlagwörter enthalten sind, die im Zusammenhang mit den Präferenzen des Benutzers stehen.

11. Verfahren nach Anspruch 10,
**dadurch gekennzeichnet, dass** die Zusatzinformation vor der Übertragung bearbeitet wird, so dass nur Zusatzinformation die für den Benutzer des Portable bedeutsam ist zugänglich ist/zum durchsuchen benutzt wird.

12. Verfahren nach Anspruch 11,
**dadurch gekennzeichnet, dass** die Zusatzinformation und/oder die Schlagwörter einem Datendienst des Rundfunkprogramms oder einer von dem Rundfunkprogramm unabhängigen Datenquelle entnommen werden.

13. Verfahren nach Anspruch 9,
**dadurch gekennzeichnet, dass** der Rundfunkinhalt von einem Spracherkennungsprogramm überprüft wird und aus dem gewonnenen Text Schlagwörter als Zusatzinformation entnommen werden.

14. Verfahren nach Anspruch 9,
**dadurch gekennzeichnet, dass** der Rundfunkinhalt von einem Spracherkennungsprogramm auf bestimmte Schlagwörter aus einem Wörterbuch überprüft werden, in dem die vom Benutzer häufig verwendeten Schlagwörter zusammengestellt sind, und dass die vom Spracherkennungsprogramm erkannten Schlagwörter als Zusatzinformation verwendet werden.

15. Verfahren nach Anspruch 14, bei dem die Zusatzinformationen nach Maßgabe des ersten Regelsatzes in der Aufnahme/Speichereinheit gespeichert und nach Maßgabe des zweiten Regelsatzes an die Speicher-/Wiedergabeeinheit übertragen werden.

16. Verfahren nach einem der vorhergehenden Ansprüche,
**dadurch gekennzeichnet, dass** der zweite Regelsatz der zugehörigen Speicher/Wiedergabeeinheit lokal veränderbar ist.

17. Verfahren nach einem der vorhergehenden Ansprüche,
**dadurch gekennzeichnet, dass** die wenigstens eine Speicher-/Wiedergabeeinheit mittels des zugehörigen zweiten Regelsatzes Inhalte von der wenigstens einen Aufnahme-/Speichereinheit anfordert.

18. Verfahren nach einem der vorhergehenden Ansprüche,
**dadurch gekennzeichnet, dass** bei Kontakt der wenigstens einen Aufnahme-/Speichereinheit und der wenigstens einen Speicher-/Wiedergabeeinheit basierend auf dem zweiten Regelsatz der Speicher-/Wiedergabeeinheit die Zusatzinformationen der in der Aufnahme/Speichereinheit aufgezeichneten Inhalte nach Inhalten die in die Speicher-/Wiedergabeeinheit überführt werden sollen, durchsucht werden.

19. Verfahren nach einem der vorhergehenden Ansprüche,
**dadurch gekennzeichnet, dass** bei Kontakt der wenigstens einen Aufnahme-/Speichereinheit und der wenigstens einen Speicher-/Wiedergabeeinheit der zweite Regelsatz auf den ersten Regelsatz zurückwirkt.

20. Verfahren nach einem der vorhergehenden Ansprüche,
**dadurch gekennzeichnet, dass** der zweite Regelsatz durch Beobachtung des Benutzerverhaltens automatisch angepasst wird.

21. Verfahren nach einem der vorhergehenden Ansprüche,
**dadurch gekennzeichnet, dass** bei Kontakt von zwei Speicher-/Wiedergabeeinheiten Inhalte untereinander ausgetauscht werden.

22. Verfahren nach einem der vorhergehenden Ansprüche,
**dadurch gekennzeichnet, dass** bei Kontakt von zwei Speicher-/Wiedergabeeinheiten wenigstens Teile von deren zugehörigen zweiten Regelsätzen untereinander ausgetauscht werden.

23. Verfahren nach einem der vorhergehenden Ansprüche,
**dadurch gekennzeichnet, dass** die wenigstens eine Aufnahme-/Speichereinheit die aufgezeichneten Inhalte automatisch in ein mit der wenigstens einen Speicher-/Wiedergabeeinheit kompatibles Format konvertiert oder auch mehrfach vorhält.

24. Verfahren nach Anspruch 23,
**dadurch gekennzeichnet, dass** die Aufnahme-/Speichereinheit die aufgezeichneten Inhalte in unterschiedlichen Formaten vorhält.

25. Verfahren nach einem der vorhergehenden Ansprüche,
**dadurch gekennzeichnet, dass** die wenigstens eine Aufnahme-/Speichereinheit über eine digitale oder analoge drahtgebundene oder drahtlose Schnittstelle auf eine Vorrichtung zugreift, die ihrerseits auf die Rundfunkprogramme zugreift.

26. Verfahren nach einem der vorangehenden Ansprüche,
**dadurch gekennzeichnet, dass** die Speicher-/Wiedergabeeinheit bei Kontakt mit der Aufnahme/Speichereinheit Inhalte an die Aufnahme-/Speichereinheit liefert.

27. Verfahren nach Anspruch 26, bei dem die Inhalte den ersten Regelsatz ändern.

28. Vorrichtung zum Aufzeichnen und Wiedergeben von Inhalten mit wenigstens einer Aufnahme-Speichereinheit und wenigstens einer Speicher-/Wiedergabeeinheit, jeweils einem der Aufnahme-/Speichereinheit zugeordneten ersten Regelsatz zur Regelung der Aufzeichnung, Speicherung, Verwaltung und gegebenenfalls Löschung der Inhalte in der wenigstens einen Aufnahme-/Speichereinheit und jeweils einem der Speicher-/Wiedergabeeinheit zugeordneten zweiten Regelsatz zur Überführung von wenigstens einem Teil der Inhalte von der wenigstens einen Aufnahme-/Speichereinheit auf die wenigstens eine Speicher-/Wiedergabeeinheit und zur Speicherung, Verwaltung und gegebenenfalls Löschung auf der wenigstens einen Speicher-/Wiedergabeeinheit.

29. Vorrichtung nach Anspruch 28,
**dadurch gekennzeichnet, dass** die wenigstens eine Aufnahme-/Speichereinheiten ein Computer ist.

30. Vorrichtung nach Anspruch 28 oder 29,
**dadurch gekennzeichnet, dass** wenigstens eine der wenigstens einen Speicher/Wiedergabeeinheiten einen Standard des MPEG Konsortiums benutzt ist.
